# EUROPÄISCHE PATENTSCHRIFT

(11) **EP 3 670 069 B1**
(45) Veröffentlichungstag und Bekanntmachung des Hinweises auf die Patenterteilung: **01.12.2021**
(21) Anmeldenummer: 19201927.1
(22) Anmeldetag: 08.10.2019
(51) Int. Cl.: B23Q 1/76, B23Q 3/10, B23K 26/38, B23K 101/06

(54) **WERKSTÜCKABSTÜTZUNG ZUR ABSTÜTZUNG VON ROHRMATERIAL IN EINER ROHRBEARBEITUNGSMASCHINE UND ROHRBEARBEITUNGSMASCHINE**
TUBE PROCESSING MACHINE AND WORKPIECE SUPPORT FOR SUPPORTING PIPE MATERIAL IN A TUBE PROCESSING MACHINE
SUPPORT DE PIÈCE PERMETTANT DE SUPPORTER UN MATÉRIAU TUBULAIRE DANS UNE MACHINE D'USINAGE DE TUBES ET MACHINE D'USINAGE DE TUBES

(30) Priorität: 19.10.2018 DE 102018126018
(43) Veröffentlichungstag der Anmeldung: 24.06.2020
(73) Patentinhaber: TRUMPF Werkzeugmaschinen GmbH + Co. KG, 71254 Ditzingen (DE)
(72) Erfinder: Haug, Thomas, 72519 Veringenstadt (DE); Businger, Markus, 72513 Hettingen (DE)
(74) Vertreter: DREISS Patentanwälte PartG mbB

(56) Entgegenhaltungen:
- EP-A1- 2 017 023
- EP-A1- 2 508 298
- EP-A1- 3 292 944
- DE-A1-102016 104 107
- IT-A1- MI20 051 693

## Beschreibung

Die Erfindung betrifft eine Werkstückabstützung zur Abstützung von Rohrmaterial in einer Rohrbearbeitungsmaschine sowie eine zugehörige Rohrbearbeitungsmaschine. Rohrbearbeitungsmaschinen können beispielsweise Rohrlaserschneidemaschinen sein, bei denen mittels Laserstrahlen zu bearbeitendes Rohrmaterial geschnitten wird. Eine derartige Maschine mit Werkstückabstützungen ist beispielsweise aus der DE 10 2016 106 067 A1 bekannt.

Aus der EP 2 017 023 B1, welche die Basis für den Oberbegriff des Anspruchs 1 darstellt, ist eine Rohrbearbeitungsmaschine mit einer Werkstückabstützung bekannt, die eine um eine Drehachse verdrehbar angeordnete Stützablage umfasst, welche einen Umfangsabschnitt mit unterschiedlichen Auflageabschnitten aufweist. Hierdurch kann mit ein und derselben Werkstückabstützung Rohrmaterial mit unterschiedlichem Durchmesser bzw. mit unterschiedlichen Geometrien sicher von der Werkstückabstützung abgestützt werden. Die Stützablage wird folglich in die Drehlage verdreht, die einen Auflageabschnitt aufweist, welcher vorzugsweise komplementär zu der Außenkontur des zu bearbeitenden Rohrmaterials ist.

Aus der EP 2 508 298 B1 ist ebenfalls eine Rohrbearbeitungsmaschine mit Werkstückabstützungen bekannt, die jeweils eine um eine Drehachse verdrehbare Stützablage mit unterschiedlichen Auflageabschnitten aufweist. Die unterschiedlichen Auflageabschnitte weisen vorzugsweise Hüllkreissegmente auf, in welche das zu bearbeitende Rohrmaterial eingelegt werden kann. Im Idealfall entspricht der jeweils eingestellte Auflageabschnitt bzw. dessen Hüllkreis, dem Durchmesser des zu bearbeitenden Rohrmaterials.

Aus der EP 3 292 944 A1 ist eine Werkstückabstützung mit den Merkmalen des Oberbegriffs des Anspruchs 1 bekannt. Die Werkstückabstützung umfasst eine Schwinge, welche an insbesondere einem Maschinenbett angeordnet werden kann sowie eine an der Schwinge vorgesehene Stützablage, die je nach zu bearbeitendem Rohrmaterial an ihrem Umfangsabschnitt unterschiedliche Auflageabschnitte aufweist. Bei der dort offenbarten Werkstückabstützung wird die Drehlage der Stützablage über einen Riemen, der von einem Motor angetrieben wird, verstellt.

Es hat sich gezeigt, dass das Bedürfnis besteht, die Drehlage der Stützablage und damit den geeigneten Auflageabschnitt händisch einstellen und festsetzten zu können.

Diese Aufgabe wird gelöst durch eine Werkstückabstützung mit den Merkmalen des Patentanspruchs 1. Folglich ist vorgesehen, dass an der Stützablage Rastausnehmungen vorgesehen sind und dass an der Schwinge wenigstens ein Rastelement derart vorgesehen ist, dass das Rastelement zur Drehverriegelung der Stützablage gegenüber der Schwinge in eine Rastausnehmung einführbar ist. Durch Vorsehen von mehreren Rastausnehmungen kann folglich die Stützablage in mehreren Drehlagen mittels des Rastelements auf einfache Art und Weise verriegelt werden. Die Rastausnehmungen sind dabei vorzugsweise als Rastbohrungen ausgebildet und das wenigstens eine Rastelement ist vorzugsweise als Rastbolzen ausgebildet. Die Stützablage kann dabei als Stützrolle ausgebildet sein, wie sie beispielsweise in der EP 2 508 298 B1 oder der EP 2 017 023 B1 offenbart ist.

Vorteilhafterweise sind die Rastausnehmungen entlang eines um die Drehachse verlaufenden Lochkreises verlaufend angeordnet. Hierdurch ergibt sich eine günstige Anordnung der Rastausnehmungen an der Stützablage.

Ferner ist vorteilhaft, wenn die Stützablage wenigstens eine in einer senkrecht zur Drehachse verlaufenden Ebene liegende Seitenwandung aufweist, an welcher letztlich die Rastausnehmungen vorgesehen sind. Bei der Seitenwandung kann es sich auch lediglich um einen Seitenwandungsabschnitt handeln, der senkrecht zur Drehachse verläuft. Entscheidend ist, dass das Rastelement vorteilhaft mit der jeweiligen Rastausnehmung zusammenwirken kann. Die Rastelemente können dabei als Rastbolzen oder Raststifte ausgebildet sein, die parallel zur Drehachse der Stützablage bewegbar angeordnet sind, sodass sie in die Rastausnehmungen eintauchen können.

Ferner ist vorteilhaft, wenn zwei Rastelemente mit unterschiedlichem Abstand zur Drehachse vorgesehen sind. Die Mittelachsen der Rastelemente liegen dabei vorzugsweise auf einem durch die Drehachse verlaufenden Strahl. Hierbei ist vorteilhaft, wenn die Rastausnehmungen entlang zweier konzentrisch zueinander verlaufender Lochkreise angeordnet sind, so dass ein Rastelement mit den Rastausnehmungen entlang des einen Lochkreises und das andere Rastelement mit den Rastausnehmungen entlang des anderen Lochkreises zusammenwirken kann. Hierdurch kann insgesamt eine robuste und dennoch genaue Drehverriegelung der Stützablage an der Schwinge erreicht werden.

In diesem Zusammenhang ist vorteilhaft, wenn die einzelnen Rastausnehmungen des einen Rastkreises jeweils auf einem durch die Drehachse verlaufenden Strahl liegen, der zwischen zwei Strahlen liegt, welche durch die Drehachse sowie durch zwei benachbart angeordnete Rastausnehmungen des anderen Rastkreises verlaufen. Hierdurch kann insgesamt eine vergleichsweise große Anzahl von verriegelbaren Drehlagen erreicht werden. Insgesamt kann hierdurch die Stützablage sehr feinstufig an der Schwinge verriegelt werden. Gemäß der Erfindung ist selbstverständlich auch denkbar, dass drei oder mehr Rastelemente mit unterschiedlichen Abständen zur Drehachse vorgesehen sind, welche dann mit drei oder mehr konzentrisch zueinander angeordneten Lochkreisen, bzw. deren Rastausnehmungen, zusammenwirken.

Die Anordnung ist dabei vorteilhafterweise so, dass jeweils einer der Rastelemente in eine zugehörige Rastausnehmung eintaucht oder einrastet, während das jeweils wenigstens andere Rastelement nicht in eine Rastausnahme gelangt, sondern beispielsweise an der Stützablage, vorzugsweise deren Seitenwandung, anliegt.

Bei Vorsehen von mehreren Rastelementen ist es vorteilhaft, wenn diese über ein gemeinsames Betätigungsmittel aus der jeweiligen Rastausnehmung ausführbar sind. Dies hat den Vorteil, dass der Bediener dann nicht differenzieren muss, welches der Rastelemente er aus der Rastausnehmung herausführen muss, um die Drehverriegelung zu lösen. Durch Betätigen des Betätigungsmittels werden sämtliche Rastelemente zeitgleich erfasst und dasjenige Rastelement, das mit der zugehörigen Rastausnehmung zusammenwirkt, aus der Rastausnehmung herausgeführt.

Gemäß der Erfindung kann ferner vorgesehen sein, dass die Rastausnehmungen auf einer Lochscheibe vorgesehen sind, die an der Seitenwandung der Stützablage vorgesehen ist oder diese bildet. Die Lochscheibe kann folglich in einem vorgelagerten Fertigungsschritt mit den Rastausnehmungen versehen werden und dann mit der Stützablage gefügt werden.

Um ein sicheres Einrasten des jeweiligen Rastelements in eine Rastausnehmung zu erreichen, ist vorteilhaft, wenn ein Vorspannelement vorgesehen ist, welches das wenigstens eine Rastelement in die Rastausnehmung drängt. Ein solches Vorspannelement kann beispielsweise eine Schraubenfeder, eine Gasdruckfeder oder ein elastomerisches Federelement sein. Hierdurch wird erreicht, dass beim Verdrehen der Stützablage die vorgespannten Rastelemente selbsttätig in die Rastausnehmungen eingreifen.

Dazu kann das jeweilige Rastelement einen Angriffsabschnitt aufweisen, wobei sich das Vorspannelement einerends am Angriffsabschnitt und anderenends an einem Gehäuseabschnitt abstützt, so dass das Rastelement letztlich in die Rastausnehmung gedrängt wird.

Ferner ist vorteilhaft, wenn an der Stützablage Markierungen/Beschriftungen vorgesehen sind, welche anzeigen, welcher der unterschiedlichen Auflagenabschnitte der Stützablage beim Zusammenwirken des Rastelements mit der jeweiligen Rastausnehmung zur Anlage mit dem Rohrmaterial kommt. Bei den Markierungen/Beschriftungen kann es sich beispielsweise um einen Durchmesser des Rohrmaterials handeln, welches letztlich von der Werkstückabstützung abgestützt werden soll. Dazu ist denkbar, dass an der Schwinge, oder an einem an der Schwinge vorgesehenen Bauteil, ein Fenster oder eine Markierung realisiert wird, welches die Markierung/Beschriftung zeigt, wenn das wenigstens eine Rastelement in eine Rastausnehmung einrastet. Jeder Raststellung bzw. jeder möglichen Drehverriegelung der Stützablage ist folglich ein Wert zugeordnet, welcher dem Bediener mittels der Markierung/Beschriftung zur Kenntnis gebracht wird.

Die eingangs genannte Aufgabe wird auch gelöst durch eine Rohrbearbeitungsmaschine zum Bearbeiten und insbesondere zum Schneiden von Rohrmaterial, vorzugsweise mittels eines Lasers. Eine derartige Rohrbearbeitungsmaschine weist ein Maschinenbett auf, an dem eine Vorschubstation zum Vorschieben von zu bearbeitendem Rohrmaterial entlang einer X-Achse vorgesehen ist. Ferner ist ein Durchschiebefutter vorgesehen, durch welches das Rohrmaterial hin zu einem Schneidkopf hingeschoben wird. Ferner ist wenigstens eine am Maschinenbett zwischen der Vorschubstation und dem Durchschiebefutter vorgesehene Werkstückabstützung zur Abstützung des Rohrmaterials vorgesehen, wobei die Werkstückabstützung eine Schwinge und eine an der Schwinge um eine Drehachse verdrehbar angeordnete Stützablage aufweist, die einen Umfangsabschnitt mit unterschiedlichen Auflageabschnitten aufweist. Bei der Werkstückabstützung handelt es sich um eine im Vorhergehenden beschriebene, erfindungsgemäße Werkstückabstützung.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine erfindungsgemäße Werkstückabstützung in isometrischer Ansicht;
- Figur 2 und 3: weitere isometrische Ansichten der Werkstückabstützung gemäß der Figur 1;
- Figur 4: einen vergrößerten Ausschnitt der Werkstückabstützung gemäß Figur 3 mit der Stützablage;
- Figur 5: einen Ausschnitt der Schwinge der Werkstückabstützung gemäß Figur 4 ohne Stützablage; und
- Figur 6: eine schematische Darstellung der Drehverriegelung der Stützablage an der Schwinge.

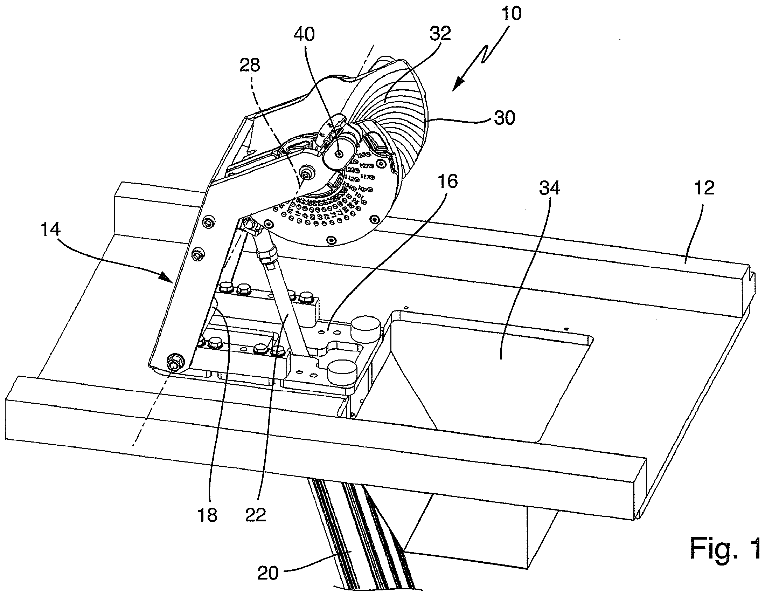

In der Figur 1 ist eine Werkstückabstützung 10 zur Abstützung von Rohrmaterial in einer Rohrbearbeitungsmaschine gezeigt. Die Rohrbearbeitungsmaschine, die in den Figuren nicht explizit dargestellt ist, kann beispielsweise eine Rohrbearbeitungsmaschine sein, wie sie in der Figur 1 der EP 2 508 298 B1 oder der Figur 1 der EP 2 017 023 B1 gezeigt ist. Derartige Rohrbearbeitungsmaschinen sehen ein Maschinenbett vor, das in Figur 1 ausschnittsweise gezeigt ist und mit dem Bezugszeichen 12 gekennzeichnet ist.

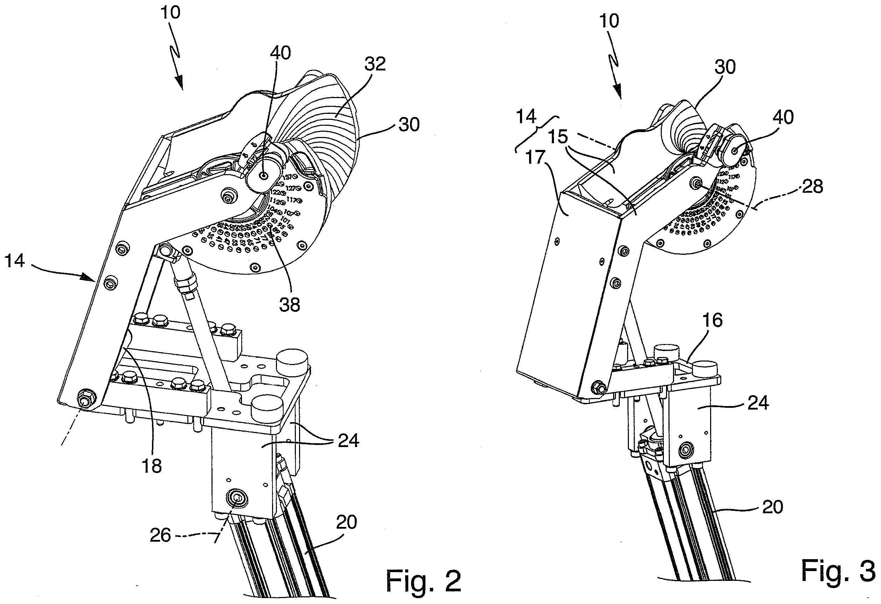

Die Werkstückabstützung 10 umfasst eine Schwinge 14, die über eine Befestigungsplatte 16 am Maschinenbett 12 befestigt ist. Die Schwinge 14 ist bezüglich der Platte 16 um eine Schwenkachse 18 verschwenkbar angeordnet. Zur Verstellung der Schwenklage ist eine Kolben-ZylinderEinheit 20 vorgesehen, deren Kolbenstange 22 an der Schwinge 14 angreift. Wie aus Figur 2 deutlich wird, weist die Platte 16 auf der der Schwinge 14 abgewandten Unterseite zwei Halteelemente 24 auf, an denen die Kolben-Zylinder-Einheit 20 um die Achse 26 verschwenkbar befestigt ist. An dem freien, dem Maschinenbett 12 abgewandten Ende der Schwinge 14 ist ein um eine Drehachse 28 verdrehbar angeordnete Stützablage 30 vorgesehen. Die Stützablage 30 weist einen Umfangsabschnitt 32 mit unterschiedlichen Auflageabschnitten zur Auflage von zu bearbeitendem Rohrmaterial auf. Je nach Drehlage der Stützablage 30 kommen unterschiedliche Auflageabschnitte der Stützablage 30 zur Anlage mit dem Rohrmaterial. Der Umfangsabschnitt 32, bzw. dessen Auflageabschnitte, sehen unterschiedliche Hüllkreisdurchmesser für unterschiedliche Durchmesser von Rohrmaterial vor. Je nach zu verwendetem Rohrmaterial kann folglich ein geeigneter Hüllkreis und damit ein geeigneter Auflageabschnitt gewählt werden.

Wie aus Figur 1 deutlich wird, ist am Maschinenbett 12 eine Aussparung 34 vorgesehen, in welche die Stützablage 30 eintauchen kann, so dass in dem Fall, in dem eine Werkstückabstützung 10 nicht erforderlich ist, diese platzsparend im bzw. am Maschinenbett 12 untergebracht werden kann. Die Schwinge 14 schwenkt dann um die Schwenkachse 18 hin auf die Oberseite des Maschinenbetts 12, wobei die Stützablage 30 in die Aussparung 34 eintaucht.

Wie aus den Figuren 1 bis 4 deutlich wird, sind an der Stützablage 30, bzw. an einer senkrecht zur Drehachse 28 verlaufenden Seitenwandung 36, eine Vielzahl von Rastausnehmungen 38 vorgesehen.

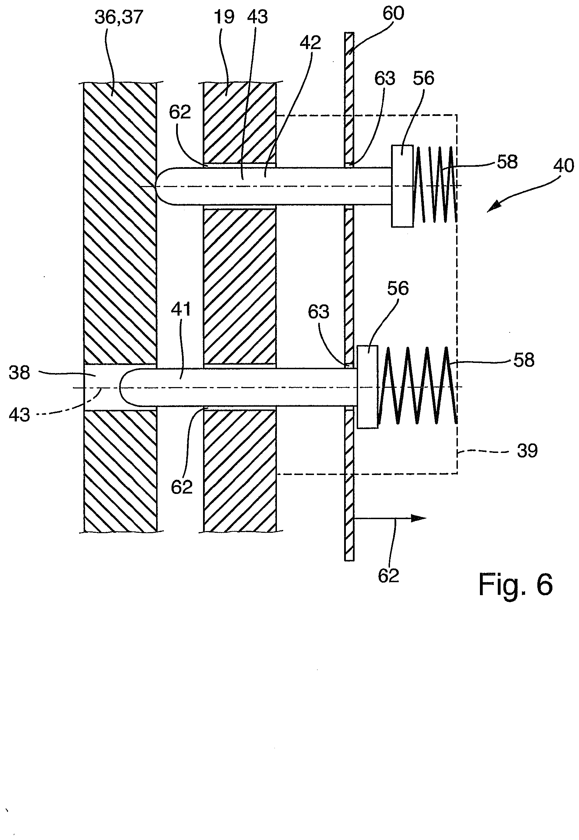

An der Schwinge ist eine Rasteinheit 40 vorgesehen, welche in der Figur 6 gezeigte Rastelemente 42 aufweist, die zur Drehverriegelung der Stützablage 30 gegenüber der Schwinge 14 in die Rastausnehmungen 38 eingeführt werden können.

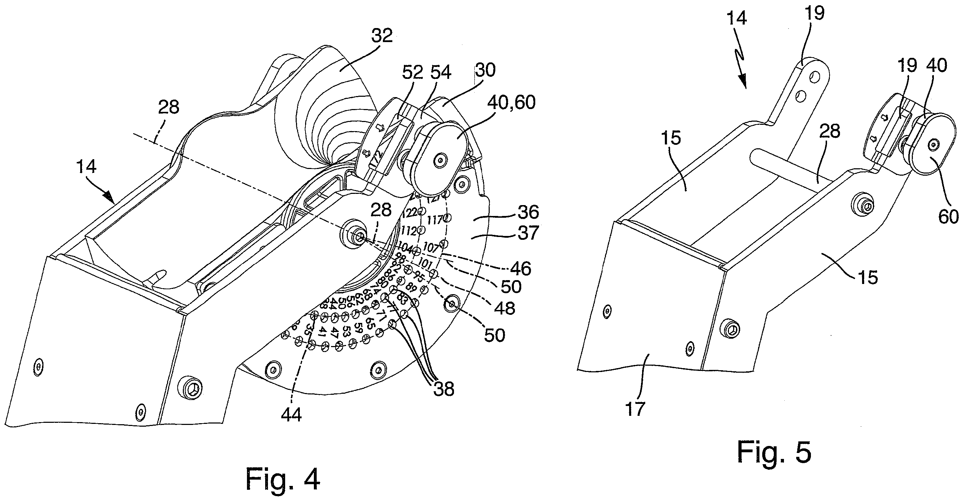

Wie aus den Figuren 2 und 3 deutlich wird, wird die Schwinge 14 von zwei Wangen 15 gebildet, welche über ein Verbindungsteil 17 miteinander starr verbunden sind.Allerdings ist auch denkbar, dass die Schwinge 14 nur aus einer Wange 15 gebildet ist. Wie insbesondere aus Figur 5 deutlich wird, ist zwischen den beiden Wangen 15 die Drehachse 28 vorgesehen. An den Wangen 15 sind Verlängerungsabschnitte 19 vorgesehen, wobei an einem der Verlängerungsabschnitte 19 letztlich die Rasteinheit 40 und das Blechteil 54 angeordnet sind.

Wie insbesondere aus Figur 4 deutlich wird, sind die Rastausnehmungen 38 entlang zweier Lochkreise 44 und 46 angeordnet. Der Lochkreis 44 liegt dabei radial weiter innen als der Lochkreis 46. Beide Lochkreise 44, 46 sind konzentrisch um die Drehachse 28 verlaufend angeordnet. Die Rastausnehmungen 38 sind dabei entlang der beiden Lochkreise 44 und 46 in eine Lochscheibe 37 eingebracht. Die Lochscheibe 37 kann insbesondere aus einem metallischen Material sein und in die Seitenwandung 36 eingesetzt werden oder diese bilden.

Jedem der beiden Lochkreise 44 und 46 ist ein Rastelement 41, 42 der Rasteinheit 40 zugeordnet. Das Rastelement 42 wirkt folglich mit den Rastausnehmungen 38 des Lochkreises 46 zusammen; das Rastelement 41 mit den Rastausnehmungen 38 des Lochkreises 44. Wie aus Figur 4 deutlich wird, liegen die Rastausnehmungen 38 des Lochkreises 46 jeweils auf einem die Drehachse 28 senkrecht schneidenden Strahl 48, der zwischen zwei Strahlen 50 liegt, welche durch zwei benachbart angeordnete Rastausnehmungen des Lochkreises 44 verlaufen. Dadurch können vergleichsweise nahe beieinander liegende Raststellungen der Stützablage 30 bezüglich der Schwinge 14 ermöglicht werden.

Jeder möglichen Raststellung, also Verriegelung der Drehlage der Stützablage 30 an der Schwinge 14, ist ein bestimmter Hülldurchmesser des Umfangsabschnitts 32 zugeordnet. Dazu sind an der Seitenwandung 36 Beschriftungen in Form von Zahlen vorgesehen, die in einem Fenster 52 dem Benutzer zur Kenntnis gebracht werden. Die im Fenster 52 angezeigte Zahl entspricht folglich dem jeweils zur Anlage kommenden Hülldurchmesser des Umfangsabschnitts 32. Das Fenster 52 wird dabei von einem Blechteil 54 gebildet, welches an der Schwinge 14 angeordnet ist.

Die Ausbildung der Rasteinheit 40 mit den Rastelementen 41 und 42 ist, wie in Figur 6 gezeigt, derart, dass lediglich eines der beiden Rastelemente 41, 42 in Eingriff mit einem der Rastausnehmungen 38 kommt. In der Figur 6 greift das Rastelement 41 in eine Rastausnehmung 38 ein; das Rastelement 42 liegt an der Seitenwandung 36 bzw. an der Lochscheibe 37 an. Die beiden Rastelemente 41, 42, deren Mittelachsen 43 parallel zur Drehachse 28 verlaufen, weisen jeweils einen Angriffsabschnitt 56 auf, gegen welchen jeweils ein Vorspannelement 58 wirkt. Der Angriffsabschnitt 56 kann, wie in Figur 6 gezeigt ist, als in radialer Richtung überstehender Bolzenkopf ausgebildet sein. Die Vorspannelemente 58 drängen dabei die Rastelemente 41, 42 gegen die Seitenwandung 36 der Stützablage 30 bzw. in die jeweilige Rastausnehmung 38. Die Vorspannelemente 58 können dabei beispielsweise als Schraubenfeder ausgebildet sein und sich einerends am Angriffsabschnitt 56 und andererends an einem Gehäuseabschnitt 39 der Rasteinheit 40 abstützen.

Die Schwinge 14 bzw. der Verlängerungsabschnitt 19 sieht dabei zwei Durchbrüche 62 auf, durch welche die Rastelemente 41, 42 jeweils hindurchragen und welche die Rastelemente 41,42 verschieblich führen. Die Rasteinheit 40 ist dabei an der einen Wange 15 der Schwinge 14, bzw. am Verlängerungselement 19, wie aus Figur 5 deutlich wird, fest angeordnet.

Um die Rastelemente 41, 42 aus den Rastausnehmungen 38 herauszuführen, ist ein Betätigungselement 60 vorgesehen. Das Betätigungselement 60 kann beispielsweise, wie in Figur 6 gezeigt, so ausgebildet sein, dass es Durchbrüche 63 aufweist, die von den Rastelementen 41, 42 durchgriffen werden. Wird das Betätigungselement 60 in Richtung des Pfeils 62, beispielsweise durch einen Bediener bewegt, so werden vom Betätigungselement 60 die Angriffsabschnitte 56 entgegen der Vorspannkraft der Vorspannelemente 58 aus der jeweiligen Rastausnehmung geführt. Da mit dem Betätigungselement 60 beide Rastelemente 41, 42 betätigt werden können, wird sichergestellt, dass jeweils das Betätigungselement 41, 42, welches mit einer Rastausnehmung 38 zusammenwirkt, aus der jeweiligen Rastausnehmung 38 herausgeführt wird. Das Betätigungselement 60 wirkt dann gegen den als Betätigungskopf ausgebildeten Angriffsabschnitt 56. Der Bediener muss folglich nicht gezielt das eine oder das andere Rastelement 41, 42 betätigen, sondern betätigt mit dem Betätigungselement 60 beide Rastelemente 41, 42.

Im Hinblick auf Figur 6 ist anzumerken, dass hier eine mögliche Ausbildung einer Rasteinheit 40 gezeigt ist. Im Rahmen der Erfindung ist denkbar, dass anders ausgebildete und an anderen Abschnitten der Rastelemente 41, 42 angreifende Vorspannelemente verwendet werden können.

Je nach zu bearbeitendem Rohrmaterial können unterschiedlich ausgebildete Stützablagen 30 Verwendung finden. Die Stützablagen 30 können dann durch Entfernen der Drehachse 28 auf einfache Art und Weise ausgetauscht werden.

## Patentansprüche

1. Werkstückabstützung (10) zur Abstützung von Rohrmaterial in einer Rohrbearbeitungsmaschine, umfassend eine Schwinge (14) und eine an der Schwinge (14) um eine Drehachse (28) verdrehbar angeordnete Stützablage (30), die einen Umfangsabschnitt (32) mit unterschiedlichen Auflageabschnitten aufweist, **dadurch gekennzeichnet, dass** an der Stützablage (30) Rastausnehmungen (38) vorgesehen sind und dass an der Schwinge (14) wenigstens ein Rastelement (41, 42) derart vorgesehen ist, dass das Rastelement (41, 42) zur Drehverriegelung der Stützablage (30) gegenüber der Schwinge (14) in eine Rastausnehmung (38) einführbar ist.

2. Werkstückabstützung (10) nach Anspruch 1, **dadurch gekennzeichnet, dass** die Rastausnehmungen (38) entlang eines um die Drehachse (28) verlaufenden Lochkreises (44, 46) verlaufend angeordnet sind.

3. Werkstückabstützung (10) nach Anspruch 1 oder 2, **dadurch gekennzeichnet, dass** die Stützablage (30) wenigstens eine in einer senkrecht zur Drehachse (28) verlaufenden Ebene liegende Seitenwandung (36) aufweist, an welcher die Rastausnehmungen (38) vorgesehen sind.

4. Werkstückabstützung (10) nach Anspruch 1 oder 2, **dadurch gekennzeichnet, dass** zwei Rastelemente (41, 42) mit unterschiedlichem Abstand zur Drehachse (28) vorgesehen sind, und dass Rastausnehmungen (41, 42) entlang zweier konzentrisch zueinander verlaufender Lochkreise (44 46) angeordnet sind, so das ein Rastelement (41) mit den Rastausnehmungen (38) entlang des einen Lochkreises (44) und das andere Rastelement (42) mit den Rastausnehmungen (38) entlang des anderen Lochkreises (46) zusammenwirken.

5. Werkstückabstützung (10) nach Anspruch 4, **dadurch gekennzeichnet, dass** die einzelnen Rastausnehmungen (38) des einen Lochkreises (46) jeweils auf einem die Drehachse schneidenden Strahl (48) liegen, der zwischen zwei Strahlen (50) liegt, welche die Drehachse schneiden sowie durch zwei benachbart angeordnete Rastausnehmungen (38) des anderen Lochkreises (44) verlaufen.

6. Werkstückabstützung (10) nach einem der Ansprüche 4 oder 5, **dadurch gekennzeichnet, dass** die Rastelemente (41, 42) über ein gemeinsames Betätigungsmittel (60) aus der jeweiligen Rastausnehmung (38) ausführbar sind.

7. Werkstückabstützung (10) nach einem der vorhergehenden Ansprüche, **dadurch gekennzeichnet, dass** die Rastausnehmungen (38) auf einer Lochscheibe (37) vorgesehen sind, die an der Seitenwandung (36) der Stützablage (30) vorgesehen ist oder diese bildet.

8. Werkstückabstützung (10) nach einem der vorhergehenden Ansprüche, **dadurch gekennzeichnet, dass** ein Vorspannelement (58) vorgesehen ist, welches das wenigstens eine Rastelement (41, 42) zur Einrastung in die Rastausnehmungen (38) drängt.

9. Werkstückabstützung (10) nach Anspruch 8, **dadurch gekennzeichnet, dass** das Rastelement (41, 42) einen Angriffsabschnitt (56) aufweist, wobei sich das Vorspannelement (58) einerends am Angriffsabschnitt (56) und andererends an einem Gehäuseabschnitt (39) abstützt.

10. Werkstückabstützung (10) nach einem der vorhergehenden Ansprüche, **dadurch gekennzeichnet, dass** an der Stützanlage (30) Markierungen/Beschriftungen vorgesehen sind, welche anzeigen, welcher der unterschiedlichen Auflageabschnitte der Stützablage (30) beim Zusammenwirken des Rastelements (41, 42) mit der jeweiligen Rastausnehmung (38) zur Anlage mit dem Rohrmaterial kommt.

11. Rohrbearbeitungsmaschine zum Bearbeiten und insbesondere zum Schneiden von Rohmaterial, mit einem Maschinenbett (12), an dem eine Vorschubstation zum Vorschieben von zu bearbeitendem Rohrmaterial entlang einer X-Achse vorgesehen ist, mit einem Durchschiebefutter, durch welches das Rohrmaterial hin zu einem Schneidkopf hindurchgeschoben wird, mit wenigstens einer am Maschinenbett zwischen der Vorschubstation und dem Durchschiebefutter vorgesehenen Werkstückabstützung (10) zur Abstützung des Rohrmaterial, wobei die Werkstückabstützung eine Schwinge (14) und eine an der Schwinge (14) um eine Drehachse (28) verdrehbar angeordnete Stützablage (30) aufweist, die einen Umfangsabschnitt (32) mit unterschiedlichen Auflageabschnitten aufweist, wobei die Werkstückabstützung (30) gemäß einem der vorhergehenden Ansprüche ausgebildet ist.

## Claims

1. Workpiece support (10) for supporting pipe material in a pipe processing machine, comprising a rocker (14) and a support rack (30) which is arranged on the rocker (14) so as to be rotatable about an axis of rotation (28) and has a circumferential portion (32) with different bearing portions, **characterized in that** latching recesses (38) are provided on the support rack (30) and **in that** at least one latching element (41, 42) is provided on the rocker (14) such that the latching element (41, 42) can be introduced into a latching recess (38) for rotationally locking the support rack (30) relative to the rocker (14).

2. Workpiece support (10) according to claim 1, **characterized in that** the latching recesses (38) are arranged so as to extend along a hole circle (44, 46) extending around the axis of rotation (28).

3. Workpiece support (10) according to claim 1 or 2, **characterized in that** the support rack (30) has at least one side wall (36) which lies in a plane perpendicular to the axis of rotation (28) and on which the latching recesses (38) are provided.

4. Workpiece support (10) according to claim 1 or 2, **characterized in that** two latching elements (41, 42) are provided at different distances from the axis of rotation (28), and **in that** latching recesses (41, 42) are arranged along two mutually concentric hole circles (44 46) so that one latching element (41) interacts with the latching recesses (38) along one hole circle (44) and the other latching element (42) interacts with the latching recesses (38) along the other hole circle (46).

5. Workpiece support (10) according to claim 4, **characterized in that** the individual latching recesses (38) of one hole circle (46) each lie on a beam (48) which intersects the axis of rotation and which lies between two beams (50) which intersect the axis of rotation and extend through two adjacently arranged latching recesses (38) of the other hole circle (44).

6. Workpiece support (10) according to any of claims 4 or 5, **characterized in that** the latching elements (41, 42) can be removed from the relevant latching recess (38) via a common actuating means (60).

7. Workpiece support (10) according to any of the preceding claims, **characterized in that** the latching recesses (38) are provided on a perforated disk (37) which is provided on or forms the side wall (36) of the support rack (30).

8. Workpiece support (10) according to any of the preceding claims, **characterized in that** a preloading element (58) is provided which urges the at least one latching element (41, 42) to latch into the latching recesses (38) .

9. Workpiece support (10) according to claim 8, **characterized in that** the latching element (41, 42) has an engagement portion (56), the preloading element (58) being supported at one end on the engagement portion (56) and at the other end on a housing portion (39).

10. Workpiece support (10) according to any of the preceding claims, **characterized in that** markings/inscriptions are provided on the support rack (30) which indicate which of the different bearing portions of the support rack (30) comes into contact with the pipe material when the latching element (41, 42) interacts with the relevant latching recess (38).

11. Pipe processing machine for processing and in particular for cutting raw material, comprising a machine bed (12) on which a feed station is provided for advancing pipe material to be processed along an X-axis, comprising a push-through chuck through which the pipe material is pushed toward a cutting head, comprising at least one workpiece support (10) which is provided on the machine bed between the feed station and the push-through chuck to support the pipe material, wherein the workpiece support has a rocker (14) and a support rack (30) which is arranged on the rocker (14) so as to be rotatable about an axis of rotation (28) and has a circumferential portion (32) with different bearing portions, wherein the workpiece support (30) is designed according to any of the preceding claims.

## Revendications

1. Support de pièce (10) pour supporter un matériau tubulaire dans une machine d'usinage de tubes, comprenant un bras oscillant (14) et un réceptacle de support (30) disposé sur le bras oscillant (14) de manière à pouvoir tourner autour d'un axe de rotation (28), qui présente une partie périphérique (32) avec différentes parties de réceptacle, **caractérisé en ce que** des évidements d'encliquetage (38) sont prévus sur le réceptacle de support (30) et qu'au moins un élément d'encliquetage (41, 42) est prévu sur le bras oscillant (14), de telle sorte que l'élément d'encliquetage (41, 42) peut être introduit dans un évidement d'encliquetage (38) pour le verrouillage rotatif du réceptacle de support (30) par rapport au bras oscillant (14).

2. Support de pièce (10) selon la revendication 1, **caractérisé en ce que** les évidements d'encliquetage (38) sont disposés de manière à s'étendre le long d'un cercle de trous (44, 46) s'étendant autour de l'axe de rotation (28).

3. Support de pièce (10) selon la revendication 1 ou 2, **caractérisé en ce que** le réceptacle de support (30) présente au moins une paroi latérale (36) située dans un plan s'étendant perpendiculairement à l'axe de rotation (28), sur laquelle les évidements d'encliquetage (38) sont prévus.

4. Support de pièce (10) selon la revendication 1 ou 2, **caractérisé en ce que** deux éléments d'encliquetage (41, 42) sont prévus avec une distance différente par rapport à l'axe de rotation (28), et que des évidements d'encliquetage (41, 42) sont disposés le long de deux cercles de trous (44, 46) s'étendant de manière concentrique l'un par rapport à l'autre, de sorte qu'un élément d'encliquetage (41) coopère avec les évidements d'encliquetage (38) le long d'un des cercles de trous (44) et l'autre élément d'encliquetage (42) avec les évidements d'encliquetage (38) le long de l'autre cercle de trous (46).

5. Support de pièce (10) selon la revendication 4, **caractérisé en ce que** les évidements d'encliquetage (38) individuels d'un des cercles de trous (46) se situent respectivement sur un rayon (48) coupant l'axe de rotation, qui se situe entre deux rayons (50), lesquels coupent l'axe de rotation ainsi que s'étendent à travers deux évidements d'encliquetage (38) de l'autre cercle de trous (44) disposés de manière voisine.

6. Support de pièce (10) selon l'une quelconque des revendications 4 ou 5, **caractérisé en ce que** les éléments d'encliquetage (41, 42) peuvent être sortis de l'évidement d'encliquetage (38) respectif par l'intermédiaire d'un moyen d'actionnement (60) commun.

7. Support de pièce (10) selon l'une quelconque des revendications précédentes, **caractérisé en ce que** les évidements d'encliquetage (38) sont prévus sur un disque perforé (37), qui est prévu sur la paroi latérale (36) du réceptacle de support (30) ou forme celle-ci.

8. Support de pièce (10) selon l'une quelconque des revendications précédentes, **caractérisé en ce qu'**un élément de précontrainte (58) est prévu, lequel pousse le au moins un élément d'encliquetage (41, 42) pour l'encliquetage dans les évidements d'encliquetage (38).

9. Support de pièce (10) selon la revendication 8, **caractérisé en ce que** l'élément d'encliquetage (41, 42) présente une partie d'action (56), dans lequel l'élément de précontrainte (58) s'appuie à une extrémité sur la partie d'action (56) et à l'autre extrémité sur une partie de boîtier (39) .

10. Support de pièce (10) selon l'une quelconque des revendications précédentes, **caractérisé en ce que** des marquages/inscriptions sont prévus sur le réceptacle de support (30), lesquels indiquent laquelle des différentes parties de réceptacle du réceptacle de support (30) vient en contact avec le matériau tubulaire lorsque l'élément d'encliquetage (41, 42) coopère avec l'évidement d'encliquetage (38) respectif.

11. Machine d'usinage de tubes pour l'usinage et en particulier pour le découpage d'un matériau tubulaire, avec un socle de machine (12), sur lequel une station d'avancement pour l'avancement d'un matériau tubulaire à usiner le long d'un axe X est prévue, avec un mandrin de passage, à travers lequel le matériau tubulaire est déplacé en direction d'une tête de découpage, avec au moins un support de pièce (10) prévu entre la station d'avancement et le mandrin de passage pour le support du matériau tubulaire, dans lequel le support de pièce présente un bras oscillant (14) et un réceptacle de support (30) disposé sur le bras oscillant (14) de manière à pouvoir tourner autour d'un axe de rotation (28), qui présente une partie périphérique (32) avec différentes parties de réceptacle, dans lequel le support de pièce (30) est réalisé selon l'une quelconque des revendications précédentes.
